(19) **Europäisches Patentamt / European Patent Office / Office européen des brevets**

(11) **EP 3 393 254 B1**

(12) **EUROPEAN PATENT SPECIFICATION**

(45) Date of publication and mention of the grant of the patent:
**21.04.2021 Bulletin 2021/16**

(21) Application number: **16823473.0**

(22) Date of filing: **20.12.2016**

(51) Int Cl.:
*A21D 8/04* (2006.01)    *A23L 7/10* (2016.01)
*A23L 7/104* (2016.01)

(86) International application number:
**PCT/US2016/067759**

(87) International publication number:
**WO 2017/112660 (29.06.2017 Gazette 2017/26)**

(54) **COMPOSITION**

ZUSAMMENSETZUNG

COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2015 GB 201522603**

(43) Date of publication of application:
**31.10.2018 Bulletin 2018/44**

(73) Proprietor: **DuPont Nutrition Biosciences ApS**
**1411 Copenhagen K (DK)**

(72) Inventors:
• **HANSEN, Jan Charles**
  **5492 Vissenbjerg (DK)**
• **SORENSEN, Jens Frisbaek**
  **8200 Aarhus (DK)**
• **MIKKELSEN, Rene**
  **8732 Hovedgaard (DK)**

(74) Representative: **D Young & Co LLP**
**120 Holborn**
**London EC1N 2DY (GB)**

(56) References cited:
WO-A1-2010/081869    WO-A1-2010/081870
WO-A1-2011/124678    WO-A1-2014/177304

**Description**

**Field of the Invention**

This invention relates to a composition containing a cereal bran. It also relates to methods of producing the composition and its use in a number of applications, in particular in food products and particularly although not exclusively in baked products such as bread.

**Background to the Invention**

Bran is the hard outer layers of cereal grain. It consists of the combined aleurone and pericarp. Along with germ, it is an integral part of whole grains, and is often produced as a by-product of milling in the production of refined grains. Bran is particularly rich in dietary fibre and essential fatty acids and contains significant quantities of starch, protein, vitamins and dietary minerals. Bran is therefore often used to enrich food products, especially breads and other baked products, for those aiming to increase their intake of dietary fibre.

Bran is largely insoluble in water. It is therefore desirable to at least partially solubilise bran to make it easier to incorporate into food compositions.

WO 2010/081869 and WO 2010/081870 both describe methods of solubilisation of cereal bran to produce a composition comprising at least one part of the cereal bran that is solubilised. WO 2010/081870 describes that this process is carried out by treating cereal bran with one or more cell-wall modifying enzyme; one or more starch modifying enzyme; and optionally one or more further enzymes. WO 2010/081869 describes that this process is carried out by treating cereal bran with one or more lipid modifying enzymes; and optionally one or more further enzymes such as xylanases and cellulases.

Both WO 2010/081869 and WO 2010/081870 describe that the solubilised cereal bran may be incorporated into a flour composition which is then used to form dough for baking. However, all of the examples of WO 2010/081869 and WO 2010/081870 describe compositions and methods where the cereal bran is wheat bran. Neither WO 2010/081869 nor WO 2010/081870 specifically disclose a composition including a cereal bran and an enzyme wherein the cereal bran is oat bran and/or rye bran and the enzyme is a cellulase enzyme, a glucanase enzyme and/or a xylanase enzyme.

WO 2011/124678 relates to a method for the modification of cereal bran and a method for the production of a modified cereal bran product.

WO 2014/177304 relates to a method of preparing a liquid oat base wherein a material comprising oat bran is suspended in an aqueous media and contacted with $\alpha$-amylase, $\beta$-glucanase, and xylanase to raise the concentration of soluble arabinoxylan by a factor of 5 or more.

**Summary of the Invention**

In one aspect, the invention provides a composition comprising:

(a) a cereal bran comprising oat bran, rye bran or a mixture thereof; and
(b) an enzyme composition comprising a mixture of a cellulase enzyme, a glucanase enzyme, and a xylanase enzyme.

Typically, the composition is a liquid suspension (preferably an aqueous suspension) containing the cereal bran and the enzyme composition. Typically, the enzyme composition causes the cereal bran to be at least partially modified and/or solubilised.

In another aspect, the invention provides a method of preparing the above composition, comprising contacting the cereal bran with the enzyme and, optionally, other components of the composition, preferably further comprising the addition of a liquid, typically water, to form an aqueous suspension of the cereal bran and the enzyme composition.

In a further aspect, the invention provides a flour composition comprising: (a) a flour; and (b) a composition as defined above.

In a yet further aspect, the invention provides a food product containing a composition as defined above or a flour composition as defined above.

In a still further aspect, the invention provides a dough composition comprising:

(a) the flour composition as defined above; and (b) water.

In a yet further aspect, the invention provides a baked product obtainable by baking the dough composition as defined above.

In a still further aspect, the invention provides a method of solubilising a cereal bran, said method comprising treating a liquid suspension of said cereal bran with an enzyme; wherein:

> (a) said cereal bran comprises oat bran, rye bran or a mixture thereof; and
> (b) said enzyme comprises a mixture of a cellulase enzyme, a glucanase enzyme and a xylanase enzyme.

In a yet further aspect, the invention provides solubilised cereal bran obtained or obtainable according to the above method.

In a still further aspect, the invention provides a food ingredient obtained or obtainable by drying the above solubilised cereal bran.

In a yet further aspect, the invention provides use of a solubilised cereal bran as defined above in the preparation of a food product, preferably wherein the food product is a dough or a baked product prepared from dough.

In a still further aspect, the invention provides a kit of parts comprising:

> (a) a cereal bran comprising oat bran, rye bran or a mixture thereof;
> (b) an enzyme comprising a mixture of a cellulase enzyme, a glucanase and a xylanase enzyme;
> (c) instructions for use in a method as defined above; and
> (d) optionally other ingredients for a food product.

In a yet further aspect, the invention provides use of an enzyme to improve the volume of bread containing a cereal bran, wherein:

> (a) said cereal bran comprises oat bran, rye bran or a mixture thereof; and
> (b) said enzyme comprises a cellulase enzyme, a glucanase and/or a xylanase enzyme or a mixture thereof.

In a still further aspect, the invention provides use of an enzyme to improve the softness of bread containing a cereal bran, wherein:

> (a) said cereal bran comprises oat bran, rye bran or a mixture thereof; and
> (b) said enzyme comprises a cellulase enzyme, a glucanase enzyme and/or a xylanase enzyme or a mixture thereof.

## Advantages and Surprising Findings

It has been surprisingly found by the present inventors that, when a cereal bran comprising oat bran and/or rye bran is treated with an enzyme composition as defined herein, and the resulting composition incorporated into a dough composition which is then baked to form bread, the resulting bread exhibits improved volume and improved softness. This is contrary to what would have been expected, as the prior art only specifically discloses enzyme treated wheat bran compositions and nowhere discloses or suggests that a bread having sufficient softness and volume could be produced using a flour to which oat bran or rye bran has been added.

In particular, it has been surprisingly found by the present inventors that, when a cereal bran comprising oat bran and/or rye bran is treated with an enzyme composition as defined herein, and the resulting composition incorporated into a dough composition including rye flour which is then baked to form bread, the resulting bread exhibits improved volume and softness. This is contrary to what would have been expected, as producing a bread of acceptable volume and softness using rye flour has proved particularly difficult in the prior art.

## Brief Description of the Figures

> Figure 1 is a picture showing the crumb of breads produced in the baking trial of Example 2; and
> Figure 2 is a picture showing the crumb of the breads produced in the baking trial of Example 3.

## General Definitions

Amino acids are referred to herein using the name of the amino acid, the three letter abbreviation or the single letter abbreviation.

The term "protein", as used herein, includes proteins, polypeptides, and peptides. As used herein, the term "amino acid sequence" is synonymous with the term "polypeptide" and/or the term "protein". In some instances, the term "amino acid sequence" is synonymous with the term "peptide". In some instances, the term "amino acid sequence" is synonymous with the term "enzyme".

The terms "protein" and "polypeptide" are used interchangeably herein. In the present disclosure and claims, the conventional one-letter and three-letter codes for amino acid residues may be used. The 3-letter code for amino acids as defined in conformity with the IUPAC IUB Joint Commission on Biochemical Nomenclature (JCBN). It is also understood that a polypeptide may be coded for by more than one nucleotide sequence due to the degeneracy of the genetic code.

Other definitions of terms may appear throughout the specification. Before the exemplary embodiments are described in more detail, it is to understand that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

It must be noted that as used herein and in the appended claims, the singular forms "a", "an", and "the" include plural referents unless the context clearly dictates otherwise. Thus, for example, reference to "an enzyme" includes a plurality of such candidate agents and equivalents thereof known to those skilled in the art, and so forth.

The publications discussed herein are provided solely for their disclosure prior to the filing date of the present application. Nothing herein is to be construed as an admission that such publications constitute prior art to the claims appended hereto.

The term "cereal" as used herein refers to the fruits from a plant of the family *Poaceae,* such seed containing at least the bran comprising the aleurone, and the starchy endosperm, with or without the additional presence of pericarp, seed coat (alternatively called testa) and/or germ. The term includes, but is not limited to species such as wheat, barley, oat, spelt, rye, sorghum, maize, and rice.

The term "solubilisation" as used herein refers to the solubilisation of cereal bran in the methods according to the invention and is intended to include any degree of solubilisation. Accordingly the "solubilisation" may be to obtain 100 % soluble material or it may be to obtain a solubilisation degree less than 100%, such as less than 70%, such as in the range of 40%-60% or such as in the range of 20%-40%. In some embodiments the solubilisation degree is determined on dry matter versus dry matter bran.

**Composition**

In a first aspect, the invention provides a composition comprising:

(a) a cereal bran comprising oat bran, rye bran or a mixture thereof; and
(b) an enzyme composition comprising a mixture of a cellulase enzyme, a glucanase enzyme, and a xylanase enzyme.

This composition is also referred to herein as "the bran composition of the invention".

Typically, the composition is a liquid suspension (preferably an aqueous suspension) containing the cereal bran and the enzyme composition.

**Bran**

The composition of the invention comprises a cereal bran. The term "bran" as used herein refers to a cereal-derived milling fraction enriched in any or all of the tissues to be selected from aleurone, pericarp and seed coat, as compared to the corresponding intact seed.

The term "milling fraction", as used herein, refers to all or part of the fractions resulting from mechanical reduction of the size of grains, through, as examples but not limited to, cutting, rolling, crushing, breakage or milling, with or without fractionation, through, as examples but not limited to, sieving, screening, sifting, blowing, aspirating, centrifugal sifting, windsifting, electrostatic separation, or electric field separation.

In one embodiment, the cereal bran comprises, consists essentially of or consists of oat bran. In one embodiment, the cereal bran comprises, consists essentially of or consists of rye bran.

The composition of the invention may additionally contain bran from other grains in addition to the oat bran and/or rye bran. Examples of other grains which may be acceptable include bran from wheat, barley, triticale, rice, and corn (maize).

In one embodiment the oat bran comprises at least 50%, such as at least 60%, such as at least 70%, such as at least 80%, such as at least 90%, such as at least 95%, such as at least 97%, such as at least 98%, such as at least 99%, such as at least 99.5%, by weight of the total weight of the bran in the composition.

In one embodiment the rye bran comprises at least 50%, such as at least 60%, such as at least 70%, such as at least 80%, such as at least 90%, such as at least 95%, such as at least 97%, such as at least 98%, such as at least 99%, such as at least 99.5%, by weight of the total weight of the bran in the composition.

When the cereal bran is contacted with the enzyme composition (particularly although not exclusively in an aqueous suspension), the activity of the enzyme composition typically causes the cereal bran to be at least partially modified. The activity of the enzyme composition also, or in the alternative, typically causes the cereal bran to be at least partially solubilised. Without wishing to be bound by theory, these modifications are thought to assist in obtaining a bread product containing cereal bran (in particular, in which oat and/or rye bran has been added to the flour used to form the dough) having acceptable and improved volume and softness.

Following treatment with the enzyme composition, the suspension of cereal bran may be dried to form a dried composition. Dried compositions are typically more suitable for incorporating into flour compositions to be made into dough to form baked products such as bread.

**Enzyme Composition**

The enzyme composition used in the present invention comprises a mixture of a cellulase enzyme, a glucanase enzyme, and a xylanase enzyme.

In one embodiment the enzyme composition used in the composition of the present invention comprises, consists essentially of or consists of a mixture of a cellulase enzyme, a glucanase enzyme and a xylanase enzyme.

In one embodiment, an enzyme used in the present invention is a glucanase. Glucanases are enzymes that break down a glucan, which is a polysaccharide comprising (or consisting of) glucose sub-units. As they perform hydrolysis of the glucosidic bond, they are hydrolases.

In one embodiment, the enzyme is an α-glucanase. The α-glucanase may be an α-1,4-glucanase (i.e. an enzyme that breaks down α-1,4-glucans), an α-1,6-glucanase, (i.e. an enzyme that breaks down α-1,6-glucan) or a mixture thereof.

In one embodiment, the enzyme is a β-glucanase. The β-glucanase may be a β-1,3-glucanase (i.e. an enzyme that breaks down β-1,3-glucans), a β-1,4-glucanase (i.e. an enzyme that breaks down β-1,4-glucans), a β-1,6 glucanase (i.e. an enzyme that breaks down β-1,6-glucans) or a mixture of any thereof. Cellulase is a specific form of β-glucanase, which perform the hydrolysis of 1,4-beta-D-glucosidic linkages in cellulose, lichenin and cereal β-D-glucans.

In one embodiment, the enzyme is a mixture of α-glucanase and a β-glucanase.

In one embodiment, the enzyme is a glucanase other than a cellulase. In one embodiment, the enzyme is a β-glucanase other than a cellulase. In one embodiment, the enzyme is a β-1,4-glucanase other than a cellulase.

In some embodiments the enzyme composition may in addition to having a glucanase activity further comprise one or more of the activities selected from the group consisting of: a mannanase, a pectinase, a xylanase, a glucuronidase, a galactanase. In one embodiment the enzyme composition comprises glucanase (e.g. a β-glucanase) activity and mannanase activity. In one embodiment the enzyme composition comprises endoglucanase (e.g. a β-glucanase) activity and pectinase activity.

In some embodiments the glucanase activity comprises at least 50%, such as at least 60%, such as at least 70%, such as at least 80%, such as at least 90%, such as at least 95%, such as at least 97%, such as at least 98%, such as at least 99%, such as 100% of the total activity of the enzyme.

In some embodiments the glucanase enzyme is of plant origin. In some embodiments the glucanase enzyme is of bacterial origin. In some embodiments the glucanase enzyme is of fungal origin.

In one embodiment, an enzyme used in the present invention is a cellulase. In this specification the term "cellulase" is understood as meaning an enzyme that catalyzes cellulolysis (i.e. the decomposition of cellulose and of some related polysaccharides); specifically, a β-1,4-glucanase enzyme that performs the hydrolysis of 1,4-beta-D-glucosidic linkages in cellulose, lichenin and cereal β-D-glucans. Cellulases break down the cellulose molecule into monosaccharides such as beta-glucose, or shorter polysaccharides and oligosaccharides.

The terms "cellulases" or "cellulolytic enzymes" as used herein are understood as comprising the cellobiohydrolases (EC 3.2.1.91), e.g., cellobiohydrolase I and cellobiohydrolase II, as well as the endo-glucanases (EC 3.2.1.4) and beta-glucosidases (EC 3.2.1.21).

Included within the definition of cellulases are: endoglucanases (EC 3.2.1.4) that cut the cellulose chains at random; cellobiohydrolases (EC 3.2.1.91) which cleave cellobiosyl units from the cellulose chain ends and beta-glucosidases (EC 3.2.1.21) that convert cellobiose and soluble cellodextrins into glucose. Among these three categories of enzymes involved in the biodegradation of cellulose, cellobiohydrolases are the key enzymes for the degradation of native crystalline cellulose. The term "cellobiohydrolase I" is defined herein as a cellulose 1,4-beta-cellobiosidase (also referred to as exo-glucanase, exo-cellobiohydrolase or 1,4-beta-cellobiohydrolase) activity, as defined in the enzyme class EC 3.2.1.91, which catalyzes the hydrolysis of 1,4-beta-D-glucosidic linkages in cellulose and cellotetraose, by the release of cellobiose from the non-reducing ends of the chains. The definition of the term "cellobiohydrolase II activity" is identical, except that cellobiohydrolase II attacks from the reducing ends of the chains.

In some embodiments the cellulase enzyme is of plant origin. In some embodiments the cellulase enzyme is of bacterial origin. In some embodiments the cellulase enzyme is of fungal origin. In some embodiments the cellulase enzyme is derived from the fungus of the genus *Aspergillus.* In some embodiments the cellulase enzyme is derived from the fungus of the genus *Aspergillus niger.* In some embodiments the cellulase enzyme is derived from the fungus of the species *Trichoderma reesei.* In some embodiments the cellulase enzyme is derived from the fungus of the species *Trichoderma reesei.* In some embodiments the cellulase enzyme is derived from the fungus of the genus *Humicola.* In some embodiments the cellulase enzyme is derived from the fungus of the species *Humicola insolens.*

In a preferred embodiment the cellulase enzyme used in the present invention is derived from the fungus of the species *Trichoderma reesei.* For example, the cellulase enzyme for use in the present invention may be a crude or purified extract of a *Trichoderma reseei* fermentate. A particular example of such a composition is that described in PCT/EP2015/080439, unpublished at the filing date of the present application. Such a composition is sold by DuPont under the name Laminex BG2.

In some embodiments the enzyme composition may in addition to having a cellulase activity further comprise one or more of the activities selected from the group consisting of: a mannanase, a pectinase, a xylanase, a glucuronidase, a galactanase. In some embodiments the cellulase activity comprises at least 50%, such as at least 60%, such as at least 70%, such as at least 80%, such as at least 90%, such as at least 95%, such as at least 97%, such as at least 98%, such as at least 99%, such as 100% of the total activity of the enzyme.

In one embodiment the cellulase is an endo-glucanase (EC 3.2.1.4). In one embodiment the cellulase is a cellobiohydrolase (EC 3.2.1.91). In one embodiment the cellulase is a beta-glucosidase (EC 3.2.1.21).

The cellulases may comprise a carbohydrate-binding module (CBM) which enhances the binding of the enzyme to a cellulose-containing fiber and increases the efficacy of the catalytic active part of the enzyme. A CBM is defined as contiguous amino acid sequence within a carbohydrate-active enzyme with a discreet fold having carbohydrate-binding activity. For further information of CBMs see the CAZy internet server or Tomme et al. (1995) in Enzymatic Degradation of Insoluble Polysaccharides (Saddler and Penner, eds.), Cellulose- binding domains: classification and properties, pp. 142-163, American Chemical Society, Washington. In a preferred embodiment the cellulolytic preparation comprising a polypeptide having cellulolytic enhancing activity (GH61A), preferably the one disclosed in WO 2005/074656.

In some embodiments the cellulase enzyme is a commercially available product, such as GC220 available from Genencor, A Danisco Division, US or CELLUCLAST® 1.5L or CELLUZYME™ available from Novozymes A/S, Denmark.

Endoglucanases (EC No. 3.2.1.4) catalyses endo hydrolysis of 1,4-beta-D-glycosidic linkages in cellulose, cellulose derivatives (such as carboxy methyl cellulose and hydroxy ethyl cellulose), lichenin, beta-1,4 bonds in mixed beta-1,3 glucans such as cereal beta-D-glucans or xyloglucans and other plant material containing cellulosic parts. The authorized name is endo-1,4-beta-D-glucan 4-glucano hydrolase, but the abbreviated term endoglucanase is used in the present specification. Endoglucanase activity may be determined using carboxymethyl cellulose (CMC) hydrolysis according to the procedure of Ghose, Pure and Appl. Chem. 1987, 59, 257-268.

In some embodiments the endoglucanase is of plant origin. In some embodiments the endoglucanase is of fungal origin. In some embodiments the endoglucanase is of bacterial origin. In some embodiments endoglucanases may be derived from a fungus of the genus *Trichoderma,* such as a fungus of the species *Trichoderma reesei.* In some embodiments endoglucanases may be derived from a fungus of a strain of the genus *Humicola,* such as a fungus of the species *Humicola insolens.* In some embodiments endoglucanases may be derived from a fungus of the genus *Chrysosporium,* such as a fungus of the species *Chrysosporium lucknowense.*

The term "cellobiohydrolase" means a 1,4-beta-D-glucan cellobiohydrolase (E.C. 3.2.1.91), which catalyzes the hydrolysis of 1,4-beta-D-glucosidic linkages in cellulose, cellooligosaccharides, or any beta-1,4-linked glucose containing polymer, releasing cellobiose from the reducing or non-reducing ends of the chain.

Examples of cellobiohydroloses are mentioned above including CBH I and CBH II from *Trichoderma reesei; Humicola insolens* and CBH II from *Thielavia terrestris* cellobiohydrolase (CELL6A). Cellobiohydrolase activity may be determined according to the procedures described by Lever et al., 1972, Anal. Biochem. 47 273-279 and by van Tilbeurgh et al., 1982, FEBS Letters 149: 152-156; van Tilbeurgh and Claeyssens, 1985, FEBS Letters 187: 283-288. The Lever et al. method is suitable for assessing hydrolysis of cellulose in corn stover and the method of van Tilbeurgh et al., is suitable for determining the cellobiohydrolase activity on a fluorescent disaccharide derivative.

The term "beta-glucosidase" means a beta-D-glucoside glucohydrolase (E.C. 3.2.1.21), which catalyzes the hydrolysis of terminal non-reducing beta-D-glucose residues with the release of beta-D-glucose. For purposes of the present invention, beta-glucosidase activity is determined according to the basic procedure described by Venturi et al., 2002, J. Basic Microbiol. 42: 55-66, except different conditions were employed as described herein. One unit of beta-glucosidase activity is defined as 1.0 $\mu$mol of p-nitrophenol produced per minute at 50°C, pH 5 from 4 mM p-nitrophenyl-beta-D-glucopyranoside as substrate in 100 mM sodium citrate, 0.01% TWEEN® 20.

In some embodiments the beta-glucosidase is of plant origin. In some embodiments the beta-glucosidase is of fungal origin. In some embodiments the beta-glucosidase is of bacterial origin. In one embodiment the beta-glucosidase is derived from a fungus of the genus *Trichoderma.* In some embodiments the beta-glucosidase is a derived from a fungus of the species *Trichoderma reesei,* such as the beta-glucosidase encoded by the bgl1 gene (see EP 562003). In one embodiment the beta-glucosidase is derived from a fungus of the genus *Aspergillus.* In some embodiments the beta-glucosidase is derived from *Aspergillus oryzae* (recombinantly produced in *Aspergillus oryzae* according to WO 02/095014), *Aspergillus fumigatus* (recombinantly produced in *Aspergillus oryzae* according to Example 22 of WO 02/095014) or *Aspergillus niger* (1981, J. Appl. 3: 157-163). In one embodiment the beta-glucosidase is derived from a fungus of the genus *Penicillium.*

In one embodiment, an enzyme used in the present invention is a xylanase. The term "xylanase" as used herein refers to an enzyme that is able to hydrolyze the beta-1,4 glycosyl bond in non-terminal beta-D-xylopyranosyl-1,4-beta-D-xylopyranosyl units of xylan or arabinoxylan. Such enzymes may also be known as include 1,4-beta-D-xylan xylanohydrolase, 1,4-beta-xylan xylanohydrolase, beta-1,4-xylan xylanohydrolase, (1-4)-beta-xylan 4-xylanohydrolase, endo-1,4-beta-xylanase, endo-(1-4)-beta-xylanase, endo-beta-1,4-xylanase, endo-1,4-beta-D-xylanase, endo-1,4-xylanase, beta-1,4-xylanase, beta-xylanase, and beta-D-xylanase.

In some embodiments the enzyme composition may in addition to having a xylanase activity further comprise one or more of the activities selected from the group consisting of: a mannanase, a pectinase, a cellulase a glucuronidase, a galactanase. In some embodiments the xylanase activity comprises at least 50%, such as at least 60%, such as at least 70%, such as at least 80%, such as at least 90%, such as at least 95%, such as at least 97%, such as at least 98%, such as at least 99%, such as 100% of the total activity of the enzyme.

The xylanases can be derived from a variety of organisms. In one embodiment the xylanase is of plant origin. In one embodiment the xylanase is of fungal origin. In one embodiment the xylanase is derived from a fungus of the genus *Aspergillus.* In one embodiment the xylanase is derived from a fungus of the genus *Penicillium.* In one embodiment the xylanase is derived from a fungus of the genus *Disporotrichum.* In one embodiment the xylanase is derived from a fungus of the genus *Neurospora.* In one embodiment the xylanase is derived from a fungus of the genus *Fusarium.* In one embodiment the xylanase is derived from a fungus of the genus *Humicola.* In one embodiment the xylanase is derived from a fungus of the genus *Trichoderma.*

In one embodiment the xylanase is of bacterial origin. In one embodiment the xylanase is derived from a bacterium of the genus *Bacillus.* In one embodiment the xylanase is derived from a bacterium of the genus *Aeromonas.* In one embodiment the xylanase is derived from a bacterium of the genus *Streptomyces.* In one embodiment the xylanase is derived from a bacterium of the genus *Nocardiopsis.* In one embodiment the xylanase is derived from a bacterium of the genus *Thermomyces.* Examples of suitable xylanases are described in WO92/17573, WO92/01793, WO91/19782 and WO94/21785.

In one aspect of the invention, the xylanase used in the present invention is an enzyme classified as EC 3.2.1.8. The official name is endo-1,4-beta-xylanase. The systematic name is 1,4-beta-D-xylan xylanohydrolase. Other names may be used, such as endo-(1-4)-beta-xylanase; (1-4)-beta-xylan 4-xylanohydrolase; endo-1,4-xylanase; xylanase; beta-1,4-xylanase; endo-1,4-xylanase; endo-beta-1,4-xylanase; endo-1,4-beta-D-xylanase; 1,4-beta-xylan xylanohydrolase; beta-xylanase; beta-1,4-xylan xylanohydrolase; endo-1,4-beta-xylanase; beta-D-xylanase. The reaction catalyzed is the endohydrolysis of 1,4-beta-D-xylosidic linkages in xylans.

In one aspect of the invention, the xylanase of the invention is a xylanase of Glycoside Hydrolase (GH) Family 11. The term "of Glycoside Hydrolase (GH) Family 11" means that the xylanase in question is or can be classified in the GH family 11. In one aspect of the invention, the xylanase used according to the invention, is a xylanase having xylanase activity as measured in the "Xylanase assay" as described herein.

According to the Cazy(ModO) site, Family 11 glycoside hydrolases can be characterised as follows:

Known Activities: xylanase (EC 3.2.1.8)
Mechanism: Retaining
Catalytic Nucleophile/Base : Glu (experimental)
Catalytic Proton Donor: Glu (experimental)
3D Structure Status: Fold: $\beta$-jelly roll
Clan: GH-C

As used herein, "Clan C" refers to groupings of families which share a common three-dimensional fold and identical catalytic machinery (see, for example, Henrissat, B. and Bairoch, A., (1996) Biochem. J., 316, 695-696).

As used herein, "Family 11" refers to a family of enzymes as established by Henrissat and Bairoch (1993) Biochem J., 293, 781-788 (see also, Henrissat and Davies (1997) Current Opinion in Structural Biol. 1997, 7, 637-644). Common features for family 11 members include high genetic homology, a size of about 20 kDa and a double displacement catalytic mechanism (see Tenkanen et al., 1992; Wakarchuk et al., 1994). The structure of the family 11 xylanases includes two large β-sheets made of β-strands and α-helices.

Family 11 xylanases include the following: *Aspergillus niger* XynA, *Aspergillus kawachii* XynC, *Aspergillus tubigensis* XynA, *Bacillus circulans* XynA, *Bacillus punzilus* XynA, *Bacillus subtilis* XynA, *Neocalliniastix patriciarum* XynA, *Streptomyces lividans* XynB, *Streptomyces lividans* XynC, *Streptomyces thermoviolaceus* XynII, *Thermomonospora fusca* XynA, *Trichoderma harzianum* Xyn, *Trichoderma reesei* XynI, *Trichoderma reesei* XynII, *Trichoderma viride* Xyn.

In some embodiments the xylanase is derived from a filamentous fungus, preferably derived from a strain of *Aspergillus,* such as *Aspergillus aculeatus;* or a strain of *Humicola,* preferably *Humicola lanuginosa.* The xylanase may preferably be an endo-1,4-beta-xylanase, more preferably an endo-1,4-beta-xylanase of GH 10 or GH11. Examples of commercial xylanases include Grindamyl H121 or Grindamyl Powerbake 930 from DuPont Nutrition Biosciences ApS, Denmark or SHEARZYME™ and BIOFEED WHEAT™ from Novozymes A/S, Denmark.

In some embodiments the enzyme composition also contains further enzymes in addition to the glucanase, cellulase and/or xylanase. Examples of additional enzymes which may be present include hydrolases (including amylases), proteases lipases, phospholipases (e.g. a phospholipase A1 a phospholipase A2 a phospholipase B, a phospholipase C or a phospholipase D) and glycolipases.

In one embodiment the enzyme composition contains a lipase. In one embodiment the lipase is a triglyceridase. In one embodiment the lipase is a glycolipases.

The lipase (e.g. a glycolipase) can be derived from a variety of organisms. In one embodiment the lipase is of plant origin. In one embodiment the lipase is of fungal origin. In one embodiment the lipase is of bacterial origin.

In one embodiment the lipase is derived from a fungus of the genus *Fusarium.* In one embodiment the lipase is derived from a fungus of the species *Fusarium heterosporum.*

In a particularly preferred embodiment, the lipase is the specific lipase derived from a fungus of the species *Fusarium heterosporum,* described generally and specifically in WO2005/087918.

## Dosage

The one or more enzyme(s) for use in the present invention may be dosed as follows.

Typically, the cellulase enzyme is present in an amount of 0.1 mg to 100 mg per 100 g bran. In one embodiment, the cellulase enzyme is present in an amount of 0.2 mg to 50 mg per 100 g bran. In one embodiment, the cellulase enzyme is present in an amount of 0.5 mg to 20 mg per 100 g bran. In one embodiment, the cellulase enzyme is present in an amount of 1 mg to 10 mg per 100 g bran. These amounts are expressed as by weight of pure enzyme protein.

Typically, the xylanase enzyme is present in an amount of 0.006 mg to 0.6 mg per 100 g bran. In one embodiment, the xylanase enzyme is present in an amount of 0.012 mg to 0.3 mg per 100 g bran. In one embodiment, the xylanase enzyme is present in an amount of 0.03 mg to 0.12 mg per 100 g bran. These amounts are expressed as by weight of pure enzyme protein.

Typically, the cellulase enzyme is present in an amount of 30 to 3000 units of cellulase activity per 100 g bran. In one embodiment, the cellulase enzyme is present in an amount of 60 to 1500 units of cellulase activity per 100 g bran. In one embodiment, the cellulase enzyme is present in an amount of 150 to 600 units of cellulase activity per 100 g bran. The Units of cellulase activity are measured in accordance with the CMC-DNS activity assay described below.

Typically, the xylanase enzyme is present in an amount of 50 to 5000 units of xylanase activity (XU) per 100 g bran. In one embodiment, the xylanase enzyme is present in an amount of 100 to 2500 units of xylanase activity (XU) per 100 g bran. In one embodiment, the xylanase enzyme is present in an amount of 250 to 1000 units of xylanase activity (XU) per 100 g bran. The Units of xylanase activity are measured in accordance with the activity assays described below.

Typically, the glucanase enzyme is present in an amount of 0.1 mg to 100 mg per 100 g bran. In one embodiment, the glucanase enzyme is present in an amount of 0.2 mg to 50 mg per 100 g bran. In one embodiment, the glucanase enzyme is present in an amount of 0.5 mg to 20 mg per 100 g bran. In one embodiment, the glucanase enzyme is present in an amount of 1 mg to 10 mg per 100 g bran. These amounts are expressed as by weight of pure enzyme protein.

Typically, the glucanase enzyme is present in an amount of 30 to 3000 units of glucanase activity per 100 g bran. In one embodiment, the glucanase enzyme is present in an amount of 60 to 1500 units of cellulase activity per 100 g bran. In one embodiment, the glucanase enzyme is present in an amount of 150 to 600 units of cellulase activity per 100 g bran. The Units of cellulase activity are measured in accordance with the CMC-DNS activity assay described below.

In a preferred embodiment the enzyme composition is a mixture of a xylanase and a cellulase, the xylanase enzyme is present in an amount of 0.006 mg to 0.6 mg per 100 g bran and the cellulase enzyme is present in an amount of 0.1 mg to 100 mg per 100 g bran. In a more preferred embodiment the enzyme composition is a mixture of a xylanase and a cellulase, the xylanase enzyme is present in an amount of 0.03 mg to 0.12 mg per 100 g bran and the cellulase enzyme is present in an amount of 1 mg to 10 mg per 100 g bran. These amounts are expressed as by weight of pure enzyme protein.

In a preferred embodiment the enzyme composition is a mixture of a xylanase and a cellulase, the xylanase enzyme is present in an amount of 50 to 5000 units of xylanase activity (XU) per 100 g bran and the cellulase enzyme is present in an amount of 30 to 3000 units of cellulase activity per 100 g bran. In a more preferred embodiment the enzyme composition is a mixture of a xylanase and a cellulase, the xylanase enzyme is present in an amount of 250 to 1000 units of xylanase activity (XU) per 100 g bran and the cellulase enzyme is present in an amount of 150 to 600 units of cellulase activity per 100 g bran.

In an especially preferred embodiment, the enzyme composition is a mixture of a bacterial xylanase (Grindamyl Powerbake 930 from DuPont Nutrition Biosciences ApS) and a cellulase and/or glucanase enzyme which is derived from a crude or purified extract of a *Trichoderma reseei* fermentate (as described in PCT/EP2015/080439, unpublished at the filing date of the present application, and sold by DuPont under the name Laminex BG2). Such an enzyme composition is also referred to in this specification as "TS-E 1732". Preferably, in this mixture, the xylanase enzyme is present in an amount of 0.006 mg to 0.6 mg per 100 g bran and this cellulase enzyme is present in an amount of 0.1 mg to 100 mg per 100 g bran. In a more preferred embodiment the enzyme composition is a mixture of the specified xylanase and the specified cellulase, the specified xylanase enzyme is present in an amount of 0.03 mg to 0.12 mg per 100 g bran and the specified cellulase enzyme is present in an amount of 1 mg to 10 mg per 100 g bran. These amounts are expressed as by weight of pure enzyme protein.

In an especially preferred embodiment, the enzyme composition is a mixture of a bacterial xylanase (Grindamyl Powerbake 930 from DuPont Nutrition Biosciences ApS) and a cellulase and/or glucanase enzyme which is derived from a crude or purified extract of a *Trichoderma reseei* fermentate (as described in PCT/EP2015/080439, unpublished at the filing date of the present application, and sold by DuPont under the name Laminex BG2), the xylanase enzyme is present in an amount of 50 to 5000 units of xylanase activity (XU) per 100 g bran and the cellulase enzyme is present in an amount of 30 to 3000 units of cellulase activity per 100 g bran. In a more preferred embodiment the enzyme composition is a mixture of the specified xylanase and the specified cellulase, the specified xylanase enzyme is present in an amount of 250 to 1000 units of xylanase activity (XU) per 100 g bran and the specified cellulase enzyme is present in an amount of 150 to 600 units of cellulase activity per 100 g bran.

**Enzyme Activity Assays**

The degree of solubilisation of the bran in the bran composition of the present invention may be measured according to the following method:
The degree of solubilisation of a plant material, e.g. cereal bran, can be determined by suspending the insoluble plant material (typically 25% bran) in water with and without enzymes, incubate the suspension under stirring and 50°C for a controlled time (e.g. 30 to 1440 minutes). After solubilisation, the solubilised material is separated from the insoluble material by centrifugation (20 min, 25000 x g, room temp). The dry matter content in the supernatant is determined either by lyophilizing part of the sample, or by a moisture analysis (Moisture analyser, AND ML-50, Buch & Holm, Denmark). All the extraction buffer can not be recovered using this protocol, however, it is assumed that the concentration of soluble material is the same in the recovered extraction buffer as in the not recovered extraction buffer, why a correction is made for the extraction buffer used in total.

Having determined the dry matter content in the soluble fraction, knowing the amount of plant material taking into work and the amount of extraction buffer, the solubilisation degree can be determined using the following equation.

$$\text{Solubilisation degree} = (((\text{gram dry matter/ml supernatant recovered}) \times (\text{ml extraction buffer used})) \times 100\%)/\text{gram plant material taken into work}$$

*Cellulase Activity Assay: By the CMC-DNS Procedure:*

The assay of cellulase activity (e.g. endo-1,4-$\beta$-glucanase activity) is based on the enzymatic hydrolysis of the 1,4-$\beta$-D-glucosidic bonds in carboxymethylcellulose (CM-Cellulose 4M, Megazyme Ltd) a $\beta$-1,4-glucan. The enzyme is diluted in double distilled water (ddH$_2$O) and 0,25 ml enzyme solution added to 1,75 ml substrate (1,5% CMC in 0.2M sodium acetate buffer, pH 5.0) at 50°C. After 10 min of incubation a 2 ml 1% 3,5-dinitrosalicylic acid (DNS) solution is added and the sample is placed in boiling water bath for 5 min. The products of the reaction ($\beta$-1,4 glucan oligosaccharides) are determined colorimetrically at 540nm by measuring the resulting increase in reducing groups reacting with the DNS.

Enzyme activity is calculated from the relationship between the concentration of reducing groups, as glucose equivalents, and absorbance using a glucose standard in the range 0.125-0.5mg/ml. One unit of cellulase activity is defined as the amount of enzyme which produces 1 $\mu$mole glucose equivalents per minute under assay conditions.

*Xylanase assay (Endo-$\beta$-1,4-Xylanase activity)*

Samples were diluted in citric acid (0.1 M) - di-sodium-hydrogen phosphate (0.2 M) buffer, pH 5.0, to obtain approx. $OD_{590}$ = 0.7 in this assay. Three different dilutions of the sample were pre-incubated for 5 minutes at 40°C. At time = 5 minutes, 1 Xylazyme tablet (crosslinked, dyed xylan substrate, Megazyme, Bray, Ireland) was added to the enzyme solution in a reaction volume of 1ml. At time = 15 minutes the reaction was terminated by adding 10 ml of 2% TRIS/NaOH, pH 12. Blanks were prepared using 1000$\mu$l buffer instead of enzyme solution. The reaction mixture was centrifuged (1500 x *g*, 10 minutes, 20°C) and the OD of the supernatant was measured at 590 nm. One xylanase unit (XU) is defined as the xylanase activity increasing $OD_{590}$ with 0.025 per minute.

## HOST CELL

The host organism can be a prokaryotic or a eukaryotic organism. The at least one enzyme may be obtainable (e.g. obtained) from any source. The at least one enzyme may be a recombinant enzyme, for example an enzyme that is heterologous to the cell in which it is expressed. In other embodiments the enzyme may be native to the cell in which it is expressed. In one embodiment the one or more enzyme(s) is not obtainable (e.g. obtained) from a *Trichoderma* (e.g. *Trichoderma reesei*) host cell.

Alternative host cells may be fungi, yeasts or plants for example. The host cell may be any *Bacillus* cell other than *B.subtilis.* Preferably, said *Bacillus* host cell being from one of the following species: *Bacillus licheniformis; B. alkalophilus; B. amyloliquefaciens; B. circulans; B. clausii; B. coagulans; B. firmus; B. lautus; B. lentus; B. megaterium; B. pumilus* or *B. stearothermophilus.* Suitably the host cell may a fungal host cell. Suitably the host cell may be any a *Trichoderma, Meripilus, Humicola, Aspergillus, Fusarium* or *Chrysosporium* host cell. Suitably, the host cell may be a protease deficient or protease minus strain and/or an $\alpha$-amylase deficient or $\alpha$-amylase minus strain.

The term "heterologous", as used herein, means a sequence derived from a separate genetic source or species. A heterologous sequence is a non-host sequence, a modified sequence, a sequence from a different host cell strain, or a homologous sequence from a different chromosomal location of the host cell. As used herein, a "homologous" sequence is a sequence that is found in the same genetic source or species i.e. it is naturally occurring in the relevant species of host cell.

## REGULATORY SEQUENCES

In some applications, an enzyme for use in the methods and/or uses described herein may be obtained by operably linking a nucleotide sequence encoding same to a regulatory sequence which is capable of providing for the expression of the nucleotide sequence, such as by the chosen host cell (such as a *B. licheniformis* cell).

As used herein, the term "operably linked" refers to a juxtaposition wherein the components described are in a relationship permitting them to function in their intended manner. A regulatory sequence "operably linked" to a coding sequence is ligated in such a way that expression of the coding sequence is achieved under conditions compatible with the control sequences.

As used herein, the term "regulatory sequences" includes promoters and enhancers and other expression regulation signals.

As used herein, the term "promoter" is used in the normal sense of the art, e.g. an RNA polymerase binding site.

Enhanced expression of the nucleotide sequence encoding the enzyme having the specific properties as defined herein may also be achieved by the selection of regulatory regions, e.g. promoter, secretion leader and terminator regions that are not regulatory regions for the nucleotide sequence encoding the enzyme in nature. Suitably, the nucleotide sequence may be operably linked to at least a promoter.

## PROMOTER

The promoter sequence to be used in accordance with the present methods may be heterologous or homologous to the sequence encoding any one of the enzymes for use in the present methods or uses described herein. The promoter sequence may be any promoter sequence capable of directing expression of an enzyme in the host cell of choice.

Suitably, the promoter sequence may be homologous to a *Bacillus* species, for example *B. licheniformis.* Preferably, the promoter sequence is homologous to the host cell of choice.

In another embodiment, the promoter may be homologous to a *Geosmithia* species, for example *Geosmithia*

*emersonii.*

Suitably, the promoter sequence may be homologous to the host cell. "Homologous to the host cell" means originating within the host organism; i.e. a promoter sequence which is found naturally in the host organism.

Suitably, the promoter sequence may be selected from the group consisting of a nucleotide sequence encoding: an α-amylase promoter, a protease promoter, a subtilisin promoter, a glutamic acid-specific protease promoter and a levansucrase promoter.

Suitably the promoter sequence may be a nucleotide sequence encoding: the LAT (e.g. the alpha-amylase promoter from *B. licheniformis,* also known as AmyL), AprL (e.g. subtilisin Carlsberg promoter), EndoGluC (e.g. the glutamic-acid specific promoter from *B. licheniformis*), AmyQ (e.g. the alpha amylase promoter from *B. amyloliquefaciens* alpha-amylase promoter) and SacB (e.g. the *B. subtilis* levansucrase promoter).

Other examples of promoters suitable for directing the transcription of a nucleic acid sequence may include: the promoter of the *Bacillus lentus* alkaline protease gene (aprH), ; the promoter of the *Bacillus subtilis* alpha-amylase gene (amyE); the promoter of the *Bacillus stearothermophilus* maltogenic amylase gene (amyM); the promoter of the *Bacillus licheniformis* penicillinase gene (penP); the promoters of the *Bacillus subtilis* xylA and xylB genes; and/or the promoter of the *Bacillus thuringiensis* subsp. *tenebrionis* CryIIIA gene.

## SIGNAL PEPTIDE

The enzyme produced by a host cell by expression of the nucleotide sequence encoding the enzyme may be secreted or may be contained intracellularly depending on the sequence and/or the vector used. A signal sequence may be used to direct secretion of the coding sequences through a particular cell membrane. The signal sequences may be natural or foreign to the coding sequence of the enzymes. For instance, the signal peptide coding sequence may be obtained from an amylase or protease gene from a *Bacillus* species, preferably from *Bacillus licheniformis.*

Suitable signal peptide coding sequences may be obtained from one or more of the following genes: maltogenic α-amylase gene, subtilisin gene, beta-lactamase gene, neutral protease gene, and/or prsA gene. In some embodiments, a nucleotide sequence encoding a signal peptide may be operably linked to a nucleotide sequence encoding any one of the enzymes disclosed herein. The enzyme for use in accordance with the present methods may be expressed in a host cell as defined herein as a fusion protein.

## EXPRESSION VECTOR

The term "expression vector" means a construct capable of *in vivo* or *in vitro* expression. Preferably, the expression vector is incorporated in the genome of the organism, such as a *B. licheniformis* host. The term "incorporated" preferably covers stable incorporation into the genome.

The nucleotide sequence encoding an enzyme as defined herein may be present in a vector, in which the nucleotide sequence is operably linked to regulatory sequences such that the regulatory sequences are capable of providing the expression of the nucleotide sequence by a suitable host organism (such as *B. licheniformis*), i.e. the vector is an expression vector. The vectors may be transformed into a suitable host cell as described above to provide for expression of a polypeptide having cellulase activity as defined herein. The choice of vector, e.g. plasmid, cosmid, virus or phage vector, genomic insert, will often depend on the host cell into which it is to be introduced. The present methods may cover other forms of expression vectors which serve equivalent functions and which are, or become, known in the art.

Once transformed into the host cell of choice, the vector may replicate and function independently of the host cell's genome, or may integrate into the genome itself. The vectors may contain one or more selectable marker genes - such as a gene which confers antibiotic resistance e.g. ampicillin, kanamycin, chloramphenicol or tetracycline resistance. Alternatively, the selection may be accomplished by co-transformation (as described in International Patent Application Publication No. WO91/17243). Vectors may be used *in vitro,* for example for the production of RNA or used to transfect or transform a host cell. The vector may further comprise a nucleotide sequence enabling the vector to replicate in the host cell in question. Examples of such sequences are the origins of replication of plasmids pUC19, pACYC177, pUB110, pE194, pAMB1 and pIJ702.

## ISOLATED

In one aspect, the enzyme is a recovered/isolated enzyme. Thus, one or more of the enzyme(s) produced may be in an isolated form.

## PURIFIED

In one aspect, the enzyme(s) may be in a purified form. As used herein, the term "purified" means that the sequence is in a relatively pure state - e.g. at least about 51% pure, or at least about 75%, or at least about 80%, or at least about 90% pure, or at least about 95% pure or at least about 98% pure.

**Methods**

The invention also provides a method for forming the composition of the invention. The method comprises contacting the cereal bran with the enzyme composition and, optionally, other components of the composition.

The method is typically carried out by forming a liquid suspension containing the cereal bran, the enzyme composition and a suspending liquid, typically water.

Therefore, it is preferred that the method further comprises the addition of water to form an aqueous suspension of the cereal bran and the enzyme composition.

It has been found that the method of the invention works particularly well when the liquid (preferably aqueous) suspension containing the cereal bran and the enzyme composition is heated to a temperature above room temperature.

Therefore, in a preferred embodiment, the method according to the invention further comprises heating the aqueous suspension.

Preferably the aqueous suspension is heated to a temperature of 30°C to 100°C, such as 35°C to 80°C, such as 40°C to 60°C, such as 45 to 55°C.

Preferably the aqueous suspension is heated for a time of 10 minutes to 48 hours, such as 30 minutes to 24 hours, such as 1 to 12 hours, such as 2 to 6 hours, such as 3 to 5 hours.

Prior to mixing the bran with the enzyme, in some embodiments of the present invention, the method may further comprising a step of i) fractionating the cereal grain to obtain endosperm, bran, and germ; ii) separating and distributing the endosperm, bran, and germ to allow them to be treated; and iii) milling the bran.

Typically, the method of the present invention causes the cereal bran to be at least partially solubilised. Accordingly, in a further aspect, the invention provides a method of solubilising a cereal bran, said method comprising treating a liquid suspension of said cereal bran with an enzyme; wherein:

　　(a) said cereal bran comprises oat bran, rye bran or a mixture thereof; and
　　(b) said enzyme comprises a mixture of a cellulase enzyme, a glucanase enzyme and a xylanase enzyme.

In some embodiments, the degree of bran solubilisation is higher than 20%, such as higher than 25%, such as higher than 30%, such as higher than 35%, such as higher than 35%, such as higher than 40%, such as higher than 50%, such as in the range of 40%-60%, such as in the range of 50%-60%. The degree of bran solubilisation is expressed as measured in a "Dry matter content (%) in soluble fraction assay" and can be measured according to the procedure of Example 1 of WO2010/081870.

The method can be carried out on a liquid suspension with a low starch content. In some embodiments, less than 50%, such as less than 40%, such as less than 30%, such as less than 20%, such as less than 10% by weight of the liquid suspension may be starch or components containing starch.

In some embodiments of the present invention, the method further comprises a step of drying the solubilised cereal bran obtained.

In some embodiments of the present invention, the method further comprises a step of spray drying the solubilised cereal bran obtained.

In some embodiments of the present invention, the method further comprises a step of lyophilisation of the solubilised cereal bran obtained.

**Applications and Food Compositions**

The present invention further relates to the use of the bran composition obtained according to the present invention in the preparation of a food product. The bran composition is useful as a food ingredient, particularly though not exclusively for incorporation into flour compositions for preparing dough and baked products, such as bread, prepared from dough.

The composition of the present invention may be used as - or in the preparation of - a food product. Here, the term "food product" is used in a broad sense - and covers food for humans as well as food for animals (i.e. a feed). In some aspects, the food is for human consumption. The food may be in the form of a solution or as a solid - depending on the use and/or the mode of application and/or the mode of administration.

In some embodiments of the present invention, the composition according to the invention is added directly in the production of the food product.

In some embodiments of the present invention, the solubilised cereal bran obtained in the method according to the invention is added directly as a mixture of soluble and insoluble cereal bran material in the production of the food product.

It is to be understood that the methods according to the present invention may produce an isolated solubilised fraction with only soluble cereal bran material, such as when the soluble fraction is harvested from a mixture of soluble and insoluble cereal bran material. In some embodiments such harvested soluble cereal bran material is used in the production of food products.

In other alternative embodiments, the solubilised cereal bran containing both soluble and insoluble material may be used without further separation or harvesting directly in production of food products.

In some embodiments of the present invention, the food product is selected from the group consisting of bread, a breakfast cereal, a pasta, biscuits, cookies, snacks, and beer.

The composition of the present invention may also be used as a food ingredient. As used herein the term "food ingredient" includes a formulation which is or can be added to functional foods or foodstuffs, for example, as a nutritional supplement and/or fibre supplement. The term food ingredient as used here also refers to formulations which can be used at low levels in a wide variety of products that require gelling, texturising, stabilising, suspending, film-forming and structuring, retention of juiciness and improved mouthfeel, without adding viscosity. The food ingredient may be in the form of a solution or as a solid - depending on the use and/or the mode of application and/or the mode of administration.

In one embodiment, the composition of the present invention may be - or may be added to - food supplements. In one embodiment, the composition of the present invention may be - or may be added to - functional foods. As used herein, the term "functional food" means food which is capable of providing not only a nutritional effect and/or a taste satisfaction, but is also capable of delivering a further beneficial effect to consumer. Accordingly, functional foods are ordinary foods that have components or ingredients (such as those described herein) incorporated into them that impart to the food a specific functional - e.g. medical or physiological benefit - other than a purely nutritional effect. Although there is no legal definition of a functional food, most of the parties with an interest in this area agree that they are foods marketed as having specific health effects.

Some functional foods are nutraceuticals. Here, the term "nutraceutical" means a food which is capable of providing not only a nutritional effect and/or a taste satisfaction, but is also capable of delivering a therapeutic (or other beneficial) effect to the consumer. Nutraceuticals cross the traditional dividing lines between foods and medicine.

Therefore, the invention further provides a food product containing a composition according to the invention.

For certain aspects, the foodstuff is a bakery product - such as bread, Danish pastry, biscuits or cookies.

The bran composition of the invention may be incorporated into a flour. Therefore, in a further aspect, the invention provides a flour composition comprising:

(a) a flour; and
(b) a composition according to the invention or a composition obtainable by a method according to the invention.

The flour may be made from any grain suitable for being milled to form a flour. Typical grains include wheat, barley, oat, rye and triticale, rice, and corn (maize). The flour may be made from the grain of one species or a mixture of species. In one embodiment, the flour comprises, consists essentially of or consists of wheat flour. In one embodiment, the flour comprises, consists essentially of or consists of rye flour.

In one aspect, the flour in the flour composition of the invention is a wholegrain flour. In this aspect, the flour composition contains bran and germ endogenous to the flour in addition to the bran from the bran composition of the invention.

In one aspect, the flour in the flour composition of the invention is a white flour (i.e. a flour from which the bran has been removed). In this aspect, the bran present in the flour composition is solely from the bran composition of the invention.

In one embodiment, the flour comprises, consists essentially of or consists of a mixture of wheat flour and rye flour. Typically, the flour comprises, consists essentially of or consists of 20% to 40% by weight, such as 25 to 35%, by weight wheat flour and 60 to 80% by weight, such as 65 to 75% by weight rye flour. Typically, the flour comprises, consists essentially of or consists of 30% by weight wheat flour and 70% by weight rye flour. Such a mixture is known to the person skilled in the art as the flour composition for preparing "Mischbrot".

In one embodiment, the bran composition according to the invention is added to the flour. The composition can be mixed with the flour by methods well known to those skilled in the art.

In one embodiment, the bran composition of the invention is present in the flour composition of the invention in an amount of 0.1% to 20% by weight of the total weight of the flour composition. In one embodiment, the bran composition of the invention is present in the flour composition of the invention in an amount of 1% to 15% by weight of the total weight of the flour composition. In one embodiment, the bran composition of the invention is present in the flour composition of the invention in an amount of 2% to 10% by weight of the total weight of the flour composition. In one embodiment, the bran composition of the invention is present in the flour composition of the invention in an amount of 5% to 7% by weight of the total weight of the flour composition. The amount by weight of the bran composition is expressed as bran dry solids, meaning that the stated amount of bran dry solids forms the specified percentage of the total weight of the flour composition.

The flour composition of the invention can be used to form a dough composition by mixing with water. Accordingly, the invention also provides a dough composition comprising: (a) the flour composition according to the invention; and (b) water. In one embodiment the dough composition of the invention further comprises yeast.

The dough composition of the invention can be baked in order to prepare baked products, such as bread. Baking conditions are well known to the person skilled in the art.

Accordingly, the invention also provides a baked product obtainable by baking the dough composition of the invention. In one embodiment, said baked product comprises bread.

It has been surprisingly found according to the present invention that when the bran composition of the invention is added to / incorporated into a flour composition (particularly where the flour is wheat flour and/or rye flour), bread produced from the flour has a greater volume than would have been expected.

Accordingly, the invention further provides use of an enzyme to improve the volume of bread containing a cereal bran, wherein:

(a) said cereal bran comprises oat bran, rye bran or a mixture thereof; and
(b) said enzyme comprises a cellulase enzyme, a glucanase and/or a xylanase enzyme or a mixture thereof.

It has been surprisingly found according to the present invention that when the bran composition of the invention is added to / incorporated into a flour composition (particularly where the flour is wheat flour and/or rye flour), bread produced from the flour is softer than would have been expected.

Accordingly, the invention further provides use of an enzyme to improve the softness of bread containing a cereal bran, wherein:

(a) said cereal bran comprises oat bran, rye bran or a mixture thereof; and
(b) said enzyme comprises a cellulase enzyme, a glucanase enzyme and/or a xylanase enzyme or a mixture thereof.

In addition to bread and other baked products prepared from dough, the bran composition of the present invention can be used in the preparation of food products such as one or more of: jams, marmalades, jellies, dairy products (such as milk or cheese), meat products, poultry products, fish products and bakery products.

By way of example, the bran composition of the present invention can be used as ingredients to soft drinks, a fruit juice or a beverage comprising whey protein, health teas, cocoa drinks, milk drinks and lactic acid bacteria drinks, yoghurt and drinking yoghurt, cheese, ice cream, water ices and desserts, confectionery, biscuits cakes and cake mixes, snack foods, breakfast cereals, instant noodles and cup noodles, instant soups and cup soups, balanced foods and drinks, sweeteners, texture improved snack bars, fibre bars, bake stable fruit fillings, care glaze, chocolate bakery filling, cheese cake flavoured filling, fruit flavoured cake filling, cake and doughnut icing, heat stable bakery filling, instant bakery filling creams, filing for cookies, ready-to-use bakery filling, reduced calorie filling, adult nutritional beverage, acidified soy/juice beverage, aseptic/retorted chocolate drink, bar mixes, beverage powders, calcium fortified soy/plain and chocolate milk, calcium fortified coffee beverage.

The bran composition of the present invention can further be used as an ingredient in food products such as American cheese sauce, anti-caking agent for grated & shredded cheese, chip dip, cream cheese, dry blended whip topping fat free sour cream, freeze/thaw dairy whipping cream, freeze/thaw stable whipped tipping, low fat & lite natural cheddar cheese, low fat Swiss style yoghurt, aerated frozen desserts, and novelty bars, hard pack ice cream, label friendly, improved economics & indulgence of hard pack ice cream, low fat ice cream: soft serve, barbecue sauce, cheese dip sauce, cottage cheese dressing, dry mix Alfredo sauce, mix cheese sauce, dry mix tomato sauce and others.

The bran composition of the present invention can also be used in beverages, in particular alcoholic beverages such as beer.

The invention therefore also provides a kit of parts comprising:

(a) a cereal bran comprising oat bran, rye bran or a mixture thereof;
(b) an enzyme comprising a mixture of a cellulase enzyme, a glucanase and a xylanase enzyme;
(c) instructions for use in a method according to the invention; and
(d) optionally other ingredients for a food product.

**EXAMPLES**

*Materials and methods*

Enzymes

The enzyme composition used in these Examples is a mixture of enzymes, comprising:

(a) a bacterial xylanase component which is found in the commercial product available from DuPont Nutrition Biosciences ApS under the trade name Powerbake 930 (referred to in WO 2010/081869); and
(b) a glucanase and cellulase components derived from a fermentation of *Trichoderma reesei* as referred to in PCT/EP2015/080439, unpublished at the filing date of the present application and available from DuPont Nutrition Biosciences ApS under the trade name Laminex BG2.

This specific composition is referred to in these Examples as "TSE 1732".
The xylanase component (a) was present in an amount of 5400 units of xylanase activity (XU) per g enzyme composition, the units being measured in accordance with the xylanase activity assay referred to above.
The glucanase/cellulase component (b) was present in an amount of 2900 units of cellulase activity per g enzyme composition, the units being measured in accordance with the CMC-DNS activity assay referred to above.
Some of the Examples also use a lipase referred to therein as "PB4070", which is a glycolipase available from DuPont Nutrition Biosciences ApS. This is an enzyme from *Fusarium heterosporum* and is disclosed in WO2005/087918.

Bran

Rye bran, batch 5011582, from Lantmännen Sweden
Oat bran, batch 2014-00075, from Lantmännen Sweden

Volume measurements

Volume measurements of the final bread were carried out using a calibrated rapeseed displacement volume meter from National MFG, USA. Volume determination is based on AACC International Method 10-05.01. After weighing of the bread the specific volume of the bread is reported as volume in cubic centimetres ($cm^3$) per g of bread.

Hardness measurements

Hardness of bread slices was determined from a texture profile analysis (TPA) using a Texture analyser TAXTplus from Stable Microsystems.

*Example 1 - Enzyme treatment of bran samples*

The experimental setup and results of the enzyme treatment of bran is shown in Table 1. A slurry of bran, water and the enzyme composition TSE 1732 was heated in a heating vessel to 50°C and kept at this temperature for 4 hours. Then the temperature was brought to 95°C for 15 minutes to inactivate the enzymes and then cooled to room temperature. The treated bran composition of the invention was stored at -20°C. Solubilisation was determined according to the bran solubilisation method described previously.

Table 1

| Sampl e | Bran Type | Water, g | TSE 1732, ppm | TSE 1732, 9 | bran, 9 | Solubilisation, % |
|---|---|---|---|---|---|---|
| 1 | Oat bran | 14400 | 2000 | 9.6 | 4800 | 54 |
| 2 | Oat bran | 2400 | 0 | 0 | 800 | - |
| 3 | Rye bran | 22500 | 3125 | 23.4 | 7500 | 51 |
| 4 | Rye bran | 2400 | 0 | 0 | 800 | 39 |

*Example 2 - Baking trials in 100% wheat flour*

The samples generated in Table 1 were tested in standard toast bread using 100% wheat flour. Water addition was adjusted to obtain the same dough viscosity in each trial. All the bran samples were dosed in at 6% (bran dry solids) meaning that dry solids bran will constitute 6% of the total flour composition.

The setup and results are shown in Table 2, wherein:

"Heated oat bran" means Sample 2 from Table 1;

"Enzyme treated oat bran" means Sample 1 from Table 1;

"Heated rye bran" means Sample 4 from Table 1; and

"Enzyme treated rye bran" means Sample 3 from Table 1.

Table 2

| Trial | 1 | 2 | 3 | 4 | 5 | 6 | 7 | 8 | 9 |
|---|---|---|---|---|---|---|---|---|---|
| Oat bran, % | - | 6 | - | - | - | - | - | - | - |
| Heated oat bran, % | - | - | 6 | - | - | - | - | - | - |
| Enzyme treated oat bran, % | - | - | - | 6 | - | - | - | - | - |
| Enzyme treated oat bran, % + 40 ppm PB4070 | - | - | - | - | 6 | | | - | - |
| Rye bran, % | - | - | - | - | - | 6 | - | - | - |
| Heated rye bran, % | - | - | - | - | - | - | 6 | - | - |
| Enzyme treated rye bran, % | - | - | - | - | - | - | - | 6 | - |
| Enzyme treated rye bran, % + 40 ppm PB4070 | - | - | - | - | - | - | - | - | 6 |
| Specific volume, cm$^3$/g | 4,86 | 4,59 | 4,82 | 5,01 | 5,12 | 4,57 | 4,76 | 4,59 | 4,83 |
| Hardness (day 1), N | 4,67 | 4,62 | 3,76 | 3,80 | 3,49 | 4,48 | 4,15 | 4,38 | 3,98 |
| Hardness (day 7), N | 10,94 | 9,38 | 8,56 | 8,50 | 8,33 | 10,26 | 8,46 | 7,80 | 7,25 |

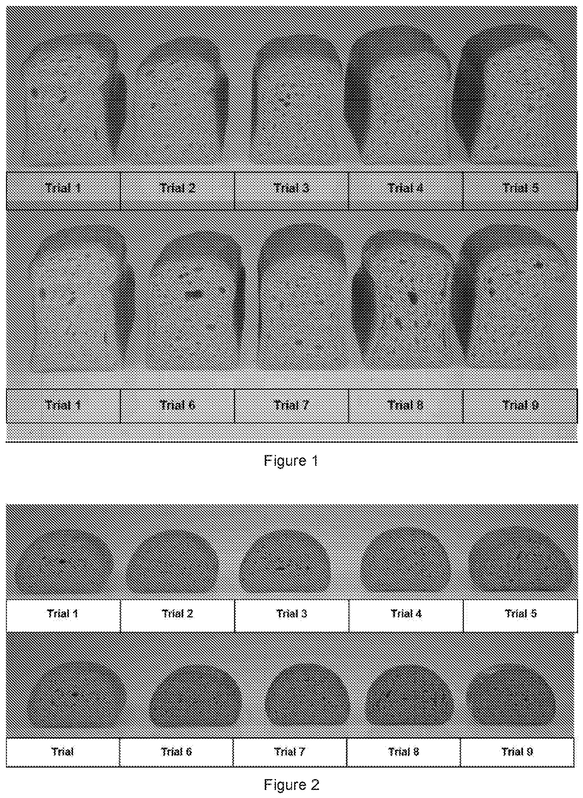

A picture showing the crumb of the final breads is shown in figure 1.

From these experiments it can be concluded as follows:

*Oat bran:*

Enzyme treatment of the oat bran according to the invention had a positive effect on the specific volume of bread incorporating the oat bran, compared with bread containing untreated oat bran. Bread incorporating the enzyme-treated bran had almost the same volume as that produced from 100 % wheat flour. In addition, bread formed from bran treated with the enzyme composition and lipase had higher specific volume.

Furthermore, it can be seen that bread containing the treated oat bran according to the invention is softer on day 1 and day 7, compared with bread containing untreated oat bran.

*Rye bran:*

It can be seen that bread containing the treated rye bran according to the invention is softer on day 1 and day 7, compared with bread containing untreated rye bran.

*Example 3 - Baking trials in 70% rye flour and 30% wheat flour, open breads,*

The samples generated in Table 1 were tested in open Mischbrot baking trials using 70% rye flour and 30% wheat flour. Water addition was adjusted to obtain the same dough viscosity in each trial. All the bran samples were dosed in at 6% (bran dry solids) meaning that dry solids bran will constitute 6% of the total flour.

The setup and results are shown in Table 3, wherein the terms mean the same as in Table 2.

Table 3

| Trial | 1 | 2 | 3 | 4 | 5 | 6 | 7 | 8 | 9 |
|---|---|---|---|---|---|---|---|---|---|
| Oat bran, % | - | 6 | - | - | - | - | - | - | - |
| Heated oat bran, % | - | - | 6 | - | - | - | - | - | - |
| Enzyme treated oat bran, % | - | - | - | 6 | - | - | - | - | - |
| Enzyme treated oat bran, % + 40 ppm PB4070 | - | - | - | - | 6 | - | - | - | - |
| Rye bran, % | - | - | - | - | - | 6 | - | - | - |
| Heated rye bran, % | - | - | - | - | - | - | 6 | - | - |
| Enzyme treated rye bran, % | - | - | - | - | - | - | - | 6 | - |
| Enzyme treated rye bran, % + 40 ppm PB4070 | - | - | - | - | - | - | - | - | 6 |
| Specific volume, cm$^3$/g | 2,06 | 2,12 | 2,14 | 2,25 | 2,71 | 2,03 | 2,01 | 2,12 | 1,87 |
| Hardness (day 7), N | 24,63 | 18,26 | 15,59 | 13,07 | 6,44 | 18,62 | 18,52 | 12,76 | 15,32 |

Figure 2 shows the crumbs of the final breads.

From these experiments it can be concluded as follows:

*Oat bran:*

Enzyme treatment of the oat bran according to the invention had a positive effect on the specific volume of bread incorporating the oat bran, both compared with bread containing untreated oat bran and compared with bread produced from flour to which oat bran had not been added. In addition, bread formed from bran treated with the enzyme composition and lipase had higher specific volume.

Furthermore, it can be seen that bread containing the treated oat bran according to the invention is softer on day 7, compared with bread containing untreated oat bran and compared with bread produced from flour to which oat bran had not been added.

*Rye bran:*

Enzyme treatment of the rye bran according to the invention had a positive effect on the specific volume of bread incorporating the rye bran, both compared with bread containing untreated rye bran and compared with bread produced from flour to which rye bran had not been added. It can also be seen that bread containing the treated rye bran according to the invention is softer on and day 7, compared with bread containing untreated rye bran.

*Example 4 - Baking trial in 70% rye flour and 30% wheat flour, baked in tins*

The samples generated in Table 1 were tested in tin baked Mischbrot baking trials using 70% rye flour and 30% wheat flour. Water addition was adjusted to obtain the same dough viscosity in each trial. All the bran samples were dosed in at 6% (bran dry solids) meaning that dry solids bran will constitute 6% of the total flour.

The setup and results are shown in Table 4, the terms having the same meaning as in Table 2.

Table 4

| Trial | 1 | 2 | 3 | 4 |
|---|---|---|---|---|
| Oat bran, % | - | 6 | - | - |
| Enzyme treated oat bran, % | - | - | 6 | - |

(continued)

| Trial | 1 | 2 | 3 | 4 |
|---|---|---|---|---|
| Enzyme treated oat bran, % + 40 ppm PB4070 | - | - | - | 6 |
| Specific volume, cm$^3$/g | 1,9 | 1,96 | 1,98 | 1,99 |
| Hardness (day 1), N | 11,28 | 6,59 | 9,90 | 7,94 |
| Hardness (day 7), N | 23,14 | 15,75 | 14,50 | 15,77 |

From these experiments it can be concluded that enzyme treatment of the oat bran according to the invention had a positive effect on the specific volume of bread incorporating the oat bran, both compared with bread containing untreated oat bran and compared with bread produced from flour not containing oat bran. Furthermore, it can be seen that bread containing the treated oat bran according to the invention is softer compared with bread produced from not containing oat bran.

*Example 5 - Baking trial in 100% rye flour*

The samples generated in Table 1 were tested in baking trials using 100% rye flour. Water addition was adjusted to obtain the same dough viscosity in each trial. All the bran samples were dosed in at 6% (bran dry solids) meaning that dry solids bran will constitute 6% of the total flour.

The setup and results are shown in Table 5, the terms having the same meaning as in Table 2.

Table 5

| Trial | 1 | 2 | 3 | 4 |
|---|---|---|---|---|
| Oat bran, % | - | 6 | - | - |
| Enzyme treated oat bran, % | - | - | 6 | - |
| Enzyme treated oat bran, % + 40 ppm PB4070 | - | - | - | 6 |
| Specific volume, cm$^3$/g | 1,5 | 1,49 | 1,54 | 1,55 |
| Hardness (day 3), N | 25,37 | 21,70 | 16,14 | 14,42 |
| Hardness (day 7), N | 28,78 | 27,03 | 18,04 | 17,84 |

From these experiments it can be concluded that enzyme treatment of the oat bran according to the invention had a positive effect on the specific volume of bread from 100% rye flour incorporating the oat bran, both compared with bread containing untreated oat bran and compared with bread produced from 100% rye flour. Furthermore, it can be seen that bread containing the treated oat bran according to the invention is softer, both compared with bread containing untreated oat bran and compared with bread produced from 100% rye flour.

**Claims**

1. A composition comprising:

   (a) a cereal bran comprising oat bran, rye bran or a mixture thereof; and
   (b) an enzyme composition comprising a mixture of a cellulase enzyme, a glucanase enzyme, and a xylanase enzyme.

2. A composition according to claim 1, wherein the enzyme composition causes the cereal bran to be at least partially modified.

3. A composition according to claim 1 or claim 2, wherein the cereal bran is oat bran or wherein the cereal bran is rye bran.

4. A composition according to any one of claims 1 to 3, wherein:

(i) the cellulase enzyme is present in an amount of 0.1 mg to 100 mg per 100 g bran;
(ii) the cellulase enzyme is present in an amount of 30 to 3000 units of cellulase activity per 100 g bran;
(iii) the xylanase enzyme is present in an amount of 0.006 mg to 0.6 mg per 100 g bran; and/or
(iv) the xylanase enzyme is present in an amount of 50 to 5000 units of xylanase activity (XU) per 100 g bran.

5. A composition according to any preceding claim, which is a liquid suspension containing the cereal bran and the enzyme composition, preferably which is an aqueous suspension containing the cereal bran and the enzyme composition.

6. A composition according to claim 5, wherein the enzyme composition causes the cereal bran to be at least partially solubilised.

7. A composition obtained or obtainable by drying the composition according to claim 5 or claim 6.

8. A composition according to any preceding claim, further comprising a lipase enzyme.

9. A method of preparing a composition according to any preceding claim, comprising contacting the cereal bran with the enzyme and, optionally, other components of the composition, preferably further comprising the addition of water to form an aqueous suspension of the cereal bran and the enzyme composition.

10. A method according to claim 9, further comprising heating the aqueous suspension, preferably wherein the aqueous suspension is heated to a temperature of 30°C to 100°C and/or wherein the aqueous suspension is heated for a time of 10 minutes to 48 hours.

11. A flour composition comprising:

(a) a flour; and
(b) a composition according to any one of claims 1 to 8.

12. A flour composition according to claim 11, wherein the flour comprises wheat flour, or wherein the flour comprises rye flour or wherein the flour comprises a mixture of wheat flour and rye flour.

13. A food product containing a composition according to any one of claims 1 to 8 or a flour composition according to claim 11 or claim 12.

14. A dough composition comprising:

(a) the flour composition according to claim 11 or claim 12; and
(b) water.

15. A baked product obtainable by baking the dough composition according to claim 14.

16. A baked product according to claim 15, said baked product comprising bread.

17. A method of solubilising a cereal bran, said method comprising treating a liquid suspension of said cereal bran with an enzyme; wherein:

(a) said cereal bran comprises oat bran, rye bran or a mixture thereof; and
(b) said enzyme comprises a mixture of a cellulase enzyme, a glucanase enzyme and a xylanase enzyme.

18. A method according to claim 17, wherein less than 30% by weight of the liquid suspension is starch or components containing starch or wherein less than 20% by weight of the liquid suspension is starch or components containing starch.

19. Solubilised cereal bran obtained or obtainable according to the method of claim17 or claim 18.

20. A food ingredient obtained or obtainable by drying the solubilised cereal bran of claim 19.

**21.** Use of a solubilised cereal bran according to claim 19 in the preparation of a food product, preferably wherein the food product is a dough or a baked product prepared from dough.

**22.** A kit of parts comprising:

(a) a cereal bran comprising oat bran, rye bran or a mixture thereof;
(b) an enzyme comprising a mixture of a cellulase enzyme, a glucanase and xylanase enzyme;
(c) instructions for use in a method according to claim 15; and
(d) optionally other ingredients for a food product.

**23.** Use of an enzyme to improve the volume of bread containing a cereal bran, wherein:

(a) said cereal bran comprises oat bran, rye bran or a mixture thereof; and
(b) said enzyme comprises a cellulase enzyme, a glucanase and/or a xylanase enzyme or a mixture thereof.

**24.** Use of an enzyme to improve the softness of bread containing a cereal bran, wherein:

(a) said cereal bran comprises oat bran, rye bran or a mixture thereof; and
(b) said enzyme comprises a cellulase enzyme, a glucanase enzyme and/or a xylanase enzyme or a mixture thereof.

**Patentansprüche**

**1.** Zusammensetzung umfassend:

(a) eine Getreidekleie umfassend Haferkleie, Roggenkleie oder eine Mischung davon; und
(b) eine Enzymzusammensetzung umfassend eine Mischung von einem Cellulaseenzym, einem Glucanaseenzym und einem Xylanaseenzym.

**2.** Zusammensetzung nach Anspruch 1, wobei die Enzymzusammensetzung verursacht, dass die Getreidekleie mindestens teilweise modifiziert wird.

**3.** Zusammensetzung nach Anspruch 1 oder Anspruch 2, wobei die Getreidekleie Haferkleie ist oder wobei die Getreidekleie Roggenkleie ist.

**4.** Zusammensetzung nach einem der Ansprüche 1 bis 3, wobei:

(i) das Cellulaseenzym in einer Menge von 0,1 mg bis 100 mg pro 100 g Kleie vorliegt;
(ii) das Cellulaseenzym in einer Menge von 30 bis 3000 Einheiten Cellulaseaktivität pro 100 g Kleie vorliegt;
(iii) das Xylanaseenzym in einer Menge von 0,006 mg bis 0,6 mg pro 100 g Kleie vorliegt; und/oder
(iv) das Xylanaseenzym in einer Menge von 50 bis 5000 Einheiten Xylanaseaktivität (XU) pro 100 g Kleie vorliegt.

**5.** Zusammensetzung nach einem vorhergehenden Anspruch, die eine flüssige Suspension ist, die die Getreidekleie und die Enzymzusammensetzung enthält, die bevorzugt eine wässrige Suspension ist, die die Getreidekleie und die Enzymzusammensetzung enthält.

**6.** Zusammensetzung nach Anspruch 5, wobei die Enzymzusammensetzung verursacht, dass die Getreidekleie mindestens teilweise löslich gemacht wird.

**7.** Zusammensetzung, die durch Trocknen der Zusammensetzung nach Anspruch 5 oder Anspruch 6 erhalten wird oder erhältlich ist.

**8.** Zusammensetzung nach einem vorhergehenden Anspruch, ferner ein Lipaseenzym umfassend.

**9.** Verfahren für die Herstellung einer Zusammensetzung nach einem vorhergehenden Anspruch, umfassend In-Kontakt-Bringen der Getreidekleie mit dem Enzym und, wahlweise, anderen Komponenten der Zusammensetzung, bevorzugt ferner die Zugabe von Wasser umfassend, um eine wässrige Suspension der Getreidekleie und der Enzymzusammensetzung zu bilden.

10. Verfahren nach Anspruch 9, umfassend Erhitzen der wässrigen Suspension, wobei bevorzugt die wässrige Suspension auf eine Temperatur von 30 °C bis 100 °C erhitzt wird und/oder wobei die wässrige Suspension für eine Zeitspanne von 10 Minuten bis 48 Stunden erhitzt wird.

11. Mehlzusammensetzung umfassend:

    (a) ein Mehl; und
    (b) eine Zusammensetzung nach einem der Ansprüche 1 bis 8.

12. Mehlzusammensetzung nach Anspruch 11, wobei das Mehl Weizenmehl umfasst oder wobei das Mehl Roggenmehl umfasst oder wobei das Mehl eine Mischung von Weizenmehl und Roggenmehl umfasst.

13. Nahrungsmittelprodukt, das eine Zusammensetzung nach einem der Ansprüche 1 bis 8 oder eine Mehlzusammensetzung nach Anspruch 11 oder Anspruch 12 enthält.

14. Teigzusammensetzung umfassend:

    (a) die Mehlzusammensetzung nach Anspruch 11 oder Anspruch 12; und
    (b) Wasser.

15. Backware, die durch Backen der Teigzusammensetzung nach Anspruch 14 erhältlich ist.

16. Backware nach Anspruch 15, wobei die Backware Brot umfasst.

17. Verfahren zum Löslichmachen einer Getreidekleie, wobei das Verfahren das Behandeln einer flüssigen Suspension der Getreidekleie mit einem Enzym umfasst; wobei:

    (a) die Getreidekleie Haferkleie, Roggenkleie oder eine Mischung davon umfasst; und
    (b) das Enzym eine Mischung von einem Cellulaseenzym, einem Glucanaseenzym und einem Xylanaseenzym umfasst.

18. Verfahren nach Anspruch 17, wobei weniger als 30 Gew.-% der flüssigen Suspension aus Stärke oder stärkehaltigen Komponenten bestehen oder wobei weniger als 20 Gew.-% der flüssigen Suspension aus Stärke oder stärkehaltigen Komponenten bestehen.

19. Löslichgemachte Getreidekleie, die dem Verfahren nach Anspruch 17 oder Anspruch 18 entsprechend erhalten wird oder erhältlich ist.

20. Nahrungsmittelbestandteil, der durch Trocknen der löslichgemachten Getreidekleie nach Anspruch 19 erhalten wird oder erhältlich ist.

21. Verwendung einer löslichgemachten Getreidekleie nach Anspruch 19 zur Herstellung eines Nahrungsmittelprodukts, wobei bevorzugt das Nahrungsmittelprodukt ein Teig oder eine Backware ist, der/die aus Teig hergestellt ist.

22. Kit von Teilen umfassend:

    (a) eine Getreidekleie umfassend Haferkleie, Roggenkleie oder eine Mischung davon;
    (b) ein Enzym umfassend eine Mischung von einem Cellulaseenzym, einem Glucanaseenzym und einem Xylanaseenzym;
    (c) Anweisungen zur Verwendung bei einem Verfahren nach Anspruch 15; und
    (d) wahlweise andere Bestandteile für ein Nahrungsmittelprodukt.

23. Verwendung eines Enzyms zum Verbessern des Volumens von Brot, das eine Getreidekleie enthält, wobei:

    (a) die Getreidekleie Haferkleie, Roggenkleie oder eine Mischung davon umfasst; und
    (b) das Enzym ein Cellulaseenzym, Glucanase und/oder ein Xylanaseenzym oder eine Mischung davon umfasst.

**24.** Verwendung eines Enzyms zum Verbessern der Weichheit von Brot, das eine Getreidekleie enthält, wobei:

(a) die Getreidekleie Haferkleie, Roggenkleie oder eine Mischung davon umfasst; und
(b) das Enzym ein Cellulaseenzym, ein Glucanaseenzym und/oder ein Xylanaseenzym oder eine Mischung davon umfasst.

**Revendications**

**1.** Composition comprenant:

(a) un son de céréale comprenant du son d'avoine, du son de seigle ou un mélange de ceux-ci; et
(b) une composition d'enzyme comprenant un mélange d'une enzyme cellulase, d'une enzyme glucanase, et d'une enzyme xylanase.

**2.** Composition selon la revendication 1, la composition d'enzyme amenant le son de céréale à être au moins partiellement modifié.

**3.** Composition selon la revendication 1 ou la revendication 2, le son de céréale étant du son d'avoine ou le son de céréale étant du son de seigle.

**4.** Composition selon l'une quelconque des revendications 1 à 3:

(i) l'enzyme cellulase étant présente en une quantité de 0,1 mg à 100 mg pour 100 g de son;
(ii) l'enzyme cellulase étant présente en une quantité de 30 à 3 000 unités d'activité cellulase pour 100 g de son;
(iii) l'enzyme xylanase étant présente en une quantité de 0,006 mg à 0,6 mg pour 100 g de son; et/ou
(iv) l'enzyme xylanase étant présente en une quantité de 50 à 5 000 unités d'activité xylanase (XU) pour 100 g de son.

**5.** Composition selon l'une quelconque des revendications précédentes, qui est une suspension liquide contenant le son de céréale et la composition d'enzyme, préférablement qui est une suspension aqueuse contenant le son de céréale et la composition d'enzyme.

**6.** Composition selon la revendication 5, la composition d'enzyme amenant le son de céréale à être au moins partiellement solubilisé.

**7.** Composition obtenue ou pouvant être obtenue par séchage de la composition selon la revendication 5 ou la revendication 6.

**8.** Composition selon l'une quelconque des revendications précédentes, comprenant en outre une enzyme lipase.

**9.** Procédé de préparation d'une composition selon l'une quelconque des revendications précédentes, comprenant la mise en contact du son de céréale avec l'enzyme et, optionnellement, d'autres composants de la composition, préférablement comprenant en outre l'addition d'eau pour former une suspension aqueuse du son de céréale et de la composition d'enzyme.

**10.** Procédé selon la revendication 9, comprenant en outre le chauffage de la suspension aqueuse, préférablement la suspension aqueuse étant chauffée à une température de 30°C à 100°C et/ou la suspension aqueuse étant chauffée sur une durée de 10 minutes à 48 heures.

**11.** Composition de farine comprenant:

(a) une farine; et
(b) une composition selon l'une quelconque des revendications 1 à 8.

**12.** Composition de farine selon la revendication 11, la farine comprenant de la farine de blé, ou la farine comprenant de la farine de seigle ou la farine comprenant un mélange de farine de blé et de farine de seigle.

**13.** Produit alimentaire contenant une composition selon l'une quelconque des revendications 1 à 8 ou une composition de farine selon la revendication 11 ou la revendication 12.

**14.** Composition de pâte comprenant:

(a) la composition de farine selon la revendication 11 ou la revendication 12; et
(b) de l'eau.

**15.** Produit cuit au four pouvant être obtenu par cuisson au four de la composition de pâte selon la revendication 14.

**16.** Produit cuit au four selon la revendication 15, ledit produit cuit au four comprenant du pain.

**17.** Procédé de solubilisation d'un son de céréale, ledit procédé comprenant le traitement d'une suspension liquide dudit son de céréale avec une enzyme:

(a) ledit son de céréale comprenant du son d'avoine, du son de seigle ou un mélange de ceux-ci; et
(b) ladite enzyme comprenant un mélange d'une enzyme cellulase, d'une enzyme glucanase et d'une enzyme xylanase.

**18.** Procédé selon la revendication 17, moins de 30 % en poids de la suspension liquide étant de l'amidon ou des composants contenant de l'amidon ou moins de 20 % en poids de la suspension liquide étant de l'amidon ou des composants contenant de l'amidon.

**19.** Son de céréale solubilisé obtenu ou pouvant être obtenu selon le procédé selon la revendication 17 ou la revendication 18.

**20.** Ingrédient alimentaire obtenu ou pouvant être obtenu par séchage du son de céréale solubilisé selon la revendication 19.

**21.** Utilisation d'un son de céréale solubilisé selon la revendication 19 dans la préparation d'un produit alimentaire, préférablement le produit alimentaire étant une pâte ou un produit cuit au four préparé à partir d'une pâte.

**22.** Kit de parties comprenant:

(a) un son de céréale comprenant du son d'avoine, du son de seigle ou un mélange de ceux-ci;
(b) une enzyme comprenant un mélange d'une enzyme cellulase, d'une glucanase et d'une enzyme xylanase;
(c) des instructions d'utilisation dans un procédé selon la revendication 15; et
(d) optionnellement d'autres ingrédients pour un produit alimentaire.

**23.** Utilisation d'une enzyme pour améliorer le volume du pain contenant un son de céréale:

(a) ledit son de céréale comprenant du son d'avoine, du son de seigle ou un mélange de ceux-ci; et
(b) ladite enzyme comprenant une enzyme cellulase, une glucanase et/ou une enzyme xylanase ou un mélange de celles-ci.

**24.** Utilisation d'une enzyme pour améliorer la souplesse d'un pain contenant un son de céréale:

(a) ledit son de céréale comprenant du son d'avoine, du son de seigle ou un mélange de ceux-ci; et
(b) ladite enzyme comprenant une enzyme cellulase, une enzyme glucanase et/ou une enzyme xylanase ou un mélange de celles-ci.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010081869 A
- WO 2010081870 A
- WO 2011124678 A
- WO 2014177304 A
- EP 2015080439 W
- WO 2005074656 A
- EP 562003 A

- WO 02095014 A
- WO 9217573 A
- WO 9201793 A
- WO 9119782 A
- WO 9421785 A
- WO 2005087918 A
- WO 9117243 A

**Non-patent literature cited in the description**

- Cellulose- binding domains: classification and properties. **TOMME et al.** Enzymatic Degradation of Insoluble Polysaccharides. American Chemical Society, 1995, 142-163
- **GHOSE.** *Pure and Appl. Chem.,* 1987, vol. 59, 257-268
- **LEVER et al.** *Anal. Biochem.,* 1972, vol. 47, 273-279
- **VAN TILBEURGH et al.** *FEBS Letters,* 1982, vol. 149, 152-156

- **VAN TILBEURGH ; CLAEYSSENS.** *FEBS Letters,* 1985, vol. 187, 283-288
- **VENTURI et al.** *J. Basic Microbiol.,* 2002, vol. 42, 55-66
- *J. Appl.,* 1981, vol. 3, 157-163
- **HENRISSAT, B. ; BAIROCH, A.** *Biochem. J.,* 1996, vol. 316, 695-696
- **HENRISSAT ; BAIROCH.** *Biochem J.,* 1993, vol. 293, 781-788
- **HENRISSAT ; DAVIES.** *Current Opinion in Structural Biol. 1997,* 1997, vol. 7, 637-644